# EUROPEAN PATENT SPECIFICATION

(11) **EP 3 074 202 B1**
(45) Date of publication and mention of the grant of the patent: **03.01.2018**
(21) Application number: 14815056.8
(22) Date of filing: 26.11.2014
(51) Int. Cl.: B29C 43/08, B29C 43/18, B29C 43/32

(54) **ROTARY COMPRESSION MOULDING APPARATUS**
ROTIERENDE KOMPRESSIONSFORMVORRICHTUNG
APAREIL ROTATIVE DE MOULAGE PAR COMPRESSION

(30) Priority: 29.11.2013 IT MO20130324
(43) Date of publication of application: 05.10.2016
(73) Proprietor: Sacmi Cooperativa Meccanici Imola Societa' Cooperativa, 40026 Imola (BO) (IT)
(72) Inventor: VILLA, Fabrizio, I-40026 Imola (Bologna) (IT)
(74) Representative: Villanova, Massimo
(86) International application number: PCT/IB2014/066360
(87) International publication number: WO 2015/079392

(56) References cited:
- EP-A2- 0 162 456
- WO-A1-2004/080684
- WO-A1-2006/138101
- WO-A2-2006/113185
- US-A- 5 658 518

## Description

### Background of the invention

The invention relates to a forming apparatus, in particular for pressure forming of doses of plastics taken from an extruder.

Specifically, but not exclusively, the invention can be applied to forming seals inside capsules for closing containers. In particular, the forming apparatus can be used for forming a seal inside a capsule having a relatively high side wall, for example greater than 40 millimetres, or 50 millimetres, or 60 millimetres in height.

The prior art comprises patent application GB 1494743, in which a moulding apparatus comprises a plurality of moulds mounted on a rotatable platform; each mould is opened and closed owing to the movement of a piston fixed to a toggle mechanism driven by cams comprising: a first cam arranged for driving the toggle mechanism so as to open the mould, a second cam arranged for closing the moulds according to a "double-blow" movement that closes the mould and subsequently reopens the mould momentaneously to enable the air trapped in the mould to escape, a third cam that performs final closing of the mould; the toggle articulation thus remains in position to maintain the mould closed for all the rest of the rotation thereof around the vertical axis of the rotatable platform until it again reaches the first cam to repeat the cycle.

Patent application US 2011/0142978 discloses a compression-forming apparatus with a carousel on the periphery of which various dies are arranged with each of which a pair of punches is associated consisting of a lower punch and an upper punch the vertical axial movements of which are controlled respectively by a lower cam profile and an upper cam profile; the lower cam profile has a flat portion that is perpendicular to the axis of the lower punch and a tilted portion arranged for moving axially the lower punch until it reaches the desired position inside the die.

Patent application WO 2012/135645 shows a moulding apparatus rotating around a horizontal axis with a plurality of moulding stations each provided with two half-moulds that are movable between a closed and an open position; the opening and closing movements are guided by cam means comprising three cam portions arranged in succession in which the third cam portion rotates around a pin and is thus movable with respect to the other cam portions until the cam follower roller, when it exits from the cam, is already in an optimum position for re-entering the cam at the successive moulding cycle.

Patent application WO 2004/080684 discloses an apparatus for forming seals in caps comprising a moulding carousel provided with a plurality of moulds each formed by a male mould and a female mould; the latter comprises a stem that carries two idle rollers arranged for engaging with two cam profiles fixed to the base; the stem also carries two additional rollers, one that engages with a vertical slit of a collar, the other that can engage with a sector fixed inside a cylindrical container.

In patent application EP 0162456, a compression-forming apparatus comprises a plurality of moulds, each having a lower half mould and an upper half mould; each half mould has an external supporting element that is liftable and lowerable by a cam follower roller and an internal supporting element that is liftable and lowerable by two cam follower rollers.

Patent application WO 2004/009319 discloses a rotating apparatus for forming tablets inside dies with the cooperation of an upper punch and a lower punch; the latter has a shaped head arranged for cooperating with various cams that are arranged in sequence along a circular path and are shaped for commanding the desired axial movement of the lower punch.

Patent application WO 2005/099990 discloses an apparatus for compression-moulding of plastics comprising a routable turret with a plurality of pairs of moulds (male mould and female mould) that open and close, in which the axial movement of each mould is guided to close by a cam follower member coupled with a cam profile and guided to open with another cam follower member coupled with another cam profile.

In patent application WO 2007/013954, each lower mould is provided with at least one roller cam follower that engages with a pair of cam surfaces arranged in a circular section at which the preforms are introduced into the moulding cavity and the moulded products are removed; the cam follower travels in sequence along the cam surfaces that are partially superimposed so as to facilitate a harmonious transition from one cam to another. The lower moulds are supported by a supporting element that enables them to have a lateral movement and an axial movement towards and away from the respective front mould; each lower mould is provided with guiding pads that engage slidably inside one or more guide rails associated with the supporting element that, in turn, comprises one or more guiding pads that engage slidably inside one or more guiding rails associated with the carousel.

The patent application US 6478568 discloses an apparatus for compression-moulding plastics comprising a snap closing mechanism associated with each pair of half-moulds to maintain the half-moulds closed during movement thereof regardless of the mechanism that commands the opening and closing of the moulds, to insulate the forces that are discharged on the half-moulds by the frame of the machine; the snap closing mechanism comprises an L-shaped element hinged around an axis and moved between two positions by an actuating rod that carries a cam follower roller engaged with a cam; a mechanism is provided that commands the opening and closing of the half-moulds by means of an upper cam, with which a roller is engaged that is associated with the upper half-mould, and a lower cam, with which a roller is engaged that is associated with the lower half- mould.

Patent application WO 2006/113185 discloses a machine for compression-moulding comprising a plurality of moulds mounted on a carousel that is rotatable around a horizontal axis, in which with each mould a cam follower roller is associated that is engaged with a cam having a first portion for opening the moulds in sequence and a second portion for closing the moulds in sequence.

In patent application WO 2006/138101, the first cam portion is fixed to the base of the machine and the second cam portion is movable with respect to the first portion and is locked in position by a releasable stop that opens in the event of excessive force on the second portion. In WO 2006/138101 a cam is also disclosed that comprises a movement wheel arranged for lifting a roller from the first cam portion to the second cam portion, which is shortened so as to reduce the angular rotation of the carousel that is necessary to close the moulds; the movement wheel has three radial arms, each provided with an edge arranged for imparting motion to the inside of the half-mould.

Patent application WO 2006/138090 shows a carousel for compression-moulding, with two cam follower rollers that engage with two cams, in which a cam extends around the periphery of the carousel to move the female mould to the closed position and to maintain the moulds closed, and another cam is arranged adjacent to the lower portion of the carousel to open the female mould.

### Summary of the invention

One object of the invention is to make an apparatus for compression-forming of doses of plastics.

One advantage is to make available an apparatus for forming seals inside capsules for containers by compressing plastics.

One advantage is to provide an apparatus for forming seals on the bottom of capsules for containers in which the capsules have relatively high heights, for example above 40, 50 or 60 millimetres.

One advantage is to increase the closing and/or opening speed of the forming units for compressing the plastics.

One advantage is to achieve high efficiency and/or productivity even with large closing and opening strokes of the forming units.

One advantage is to provide a constructionally cheap and simple apparatus for compression moulding plastics.

One advantage is to make a forming apparatus with regular, quiet operation reducing shocks and vibrations.

These objects and advantages, and still others, are achieved by the apparatus according to appended claim 1. Preferred embodiments of the invention are defined in the dependent claims.

A compression-forming apparatus comprises a plurality of forming units arranged on a rotating carousel, in which each forming unit has a first and a second forming half unit that can close on one another to compression-mould an object and can open to expel the moulded object, the first forming half unit being connected to an auxiliary member by a motion multiplying mechanism, so that a movement of the auxiliary member by a certain amount is matched by a movement by a greater amount of the first forming half unit; the movement of the auxiliary member is controlled by a cam follower coupled with one first cam profile to have an initial rapid closing step of the forming unit without compression force, after which there is a forming step in which the compression force that is generated between the first and the second forming half unit is discharged on a second cam profile by another cam follower associated with the first forming half unit.

### Brief description of the drawings

The invention can be better understood and implemented with reference to the attached drawings that illustrate a non-limiting embodiment of the invention.
Figure 1 is a top plan view of an embodiment of a forming machine made according to the invention.

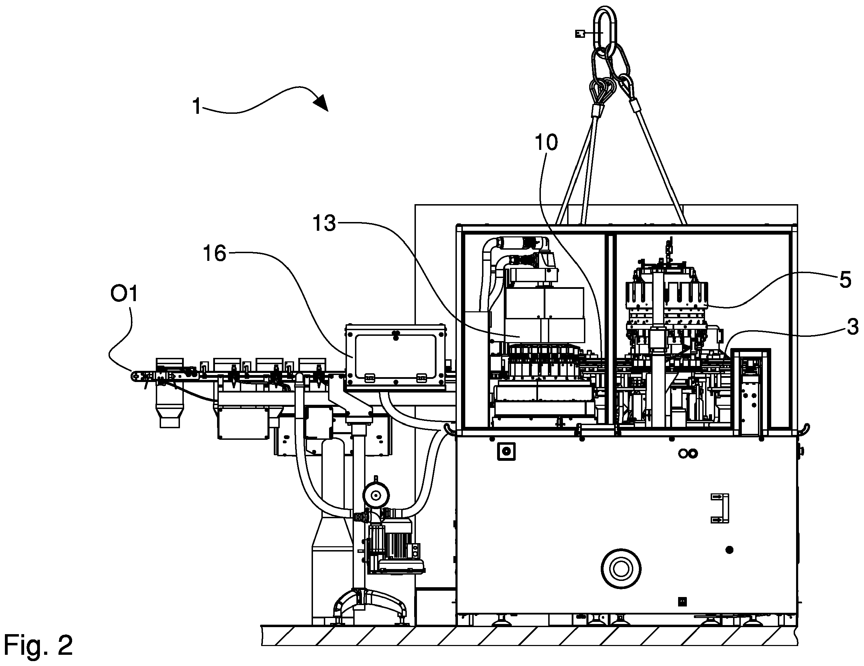

Figure 2 is a side view from the right of figure 1.

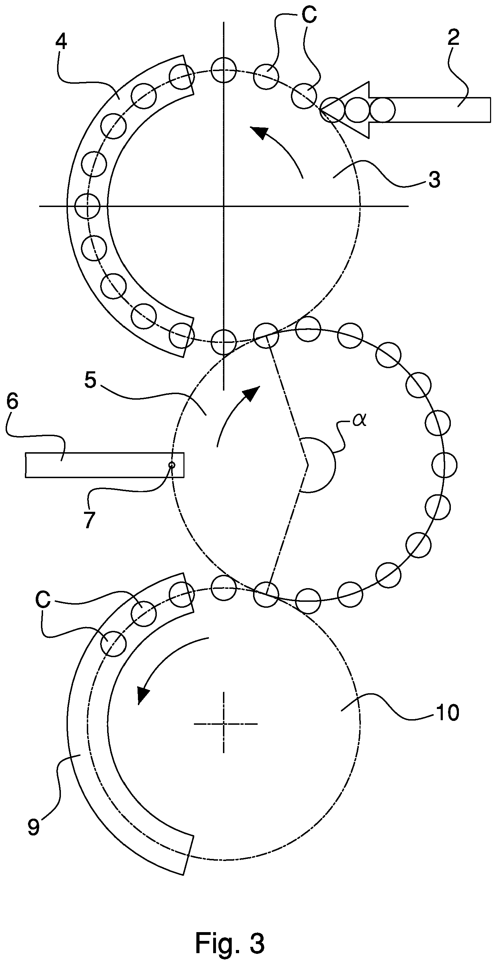

Figure 3 is an enlarged detail of figure 1.

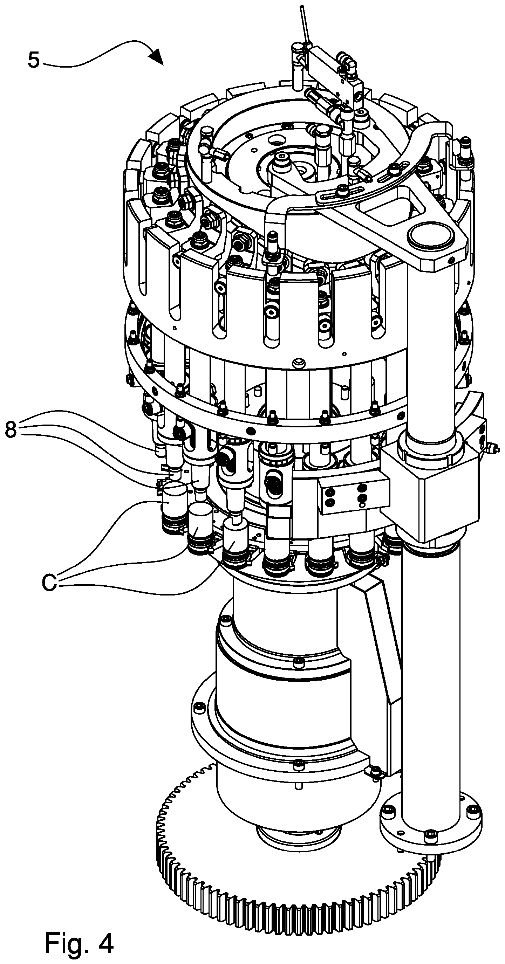

Figure 4 is a perspective view of the dose insertion carousel of forming machine in figure 1.
Figure 5 is a section, with a vertical section plane, of a part of the dose insertion carousel of figure 4.

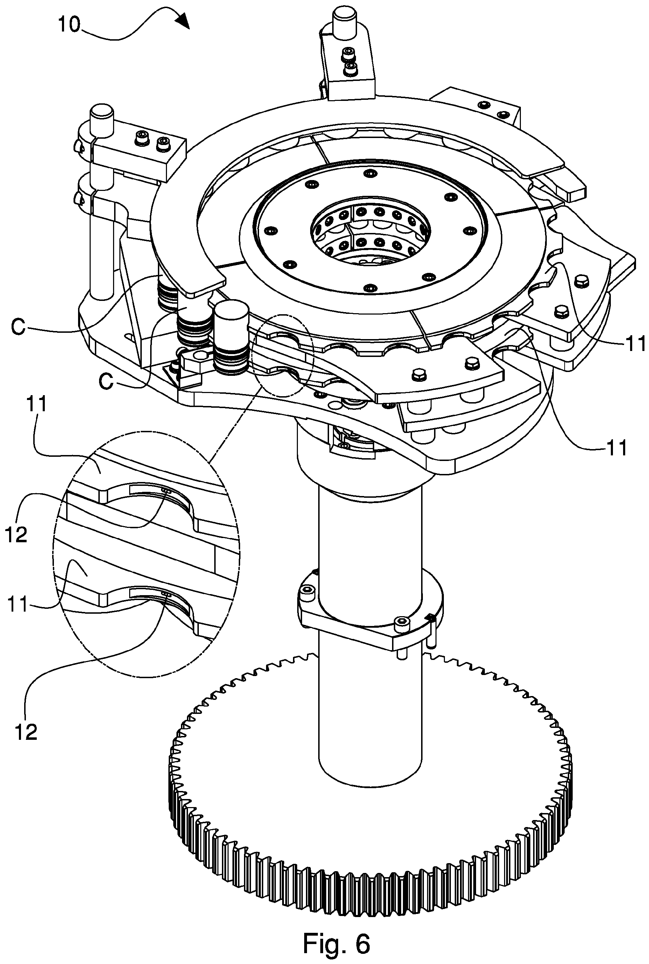

Figure 6 is a perspective view of the capsule transforming carousel of the forming machine of figure 1.

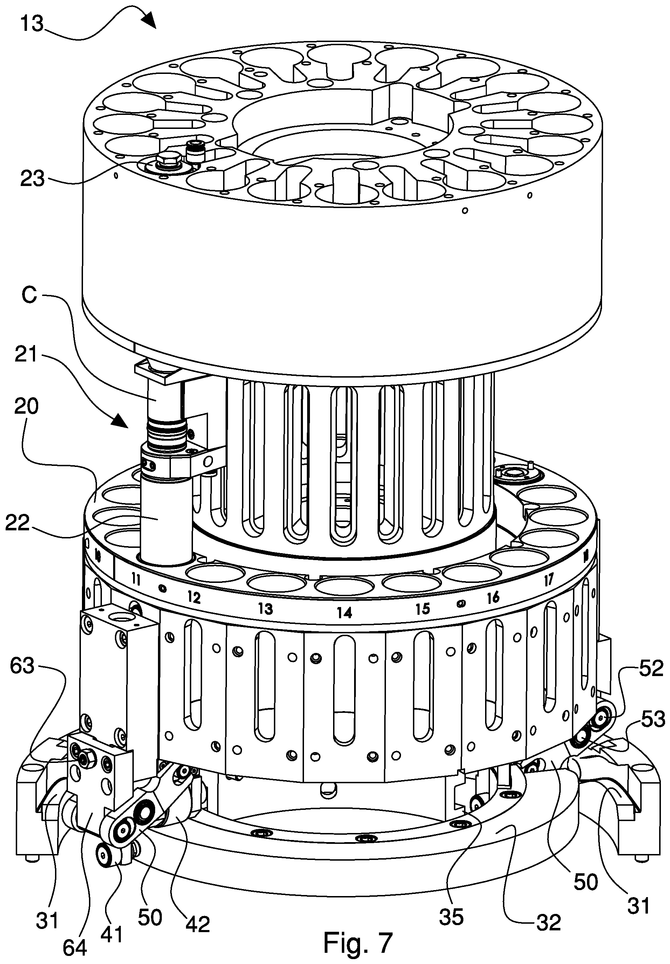

Figure 7 is a perspective view of the forming apparatus of the forming machine of figure 1.
Figures 8A, 8B and 8C show schematically three steps in sequence of the operation of the movement system of a forming half unit of the forming apparatus of figure 7.

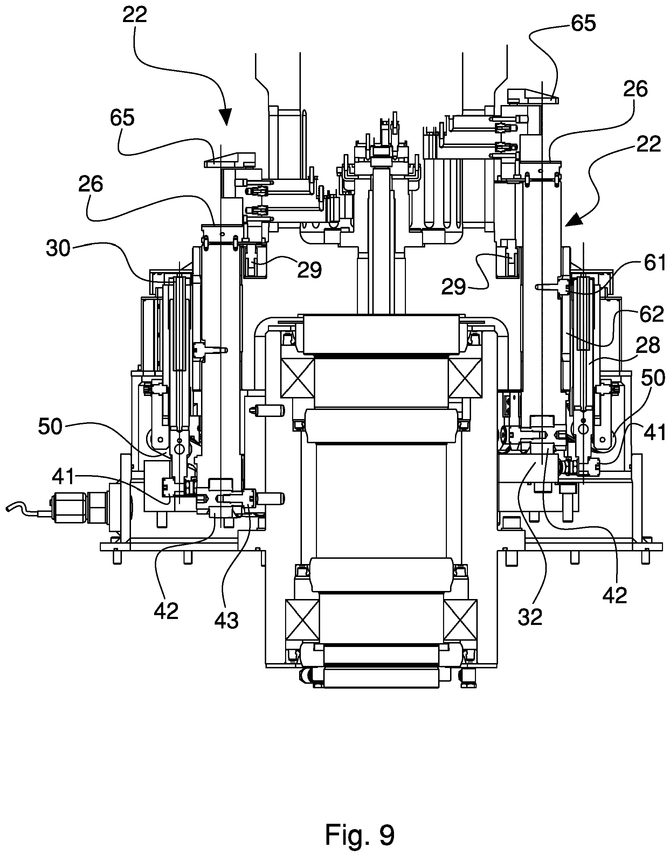

Figure 9 is a schematic section, with a vertical section plane, of a part of the forming apparatus of figure 7.

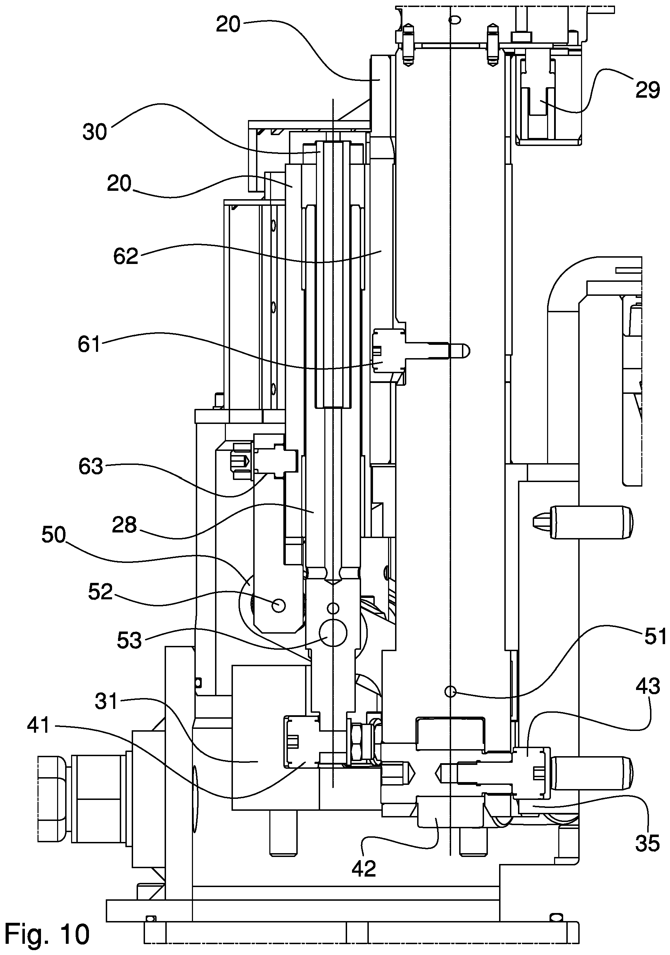

Figure 10 is an enlarged detail of figure 9.

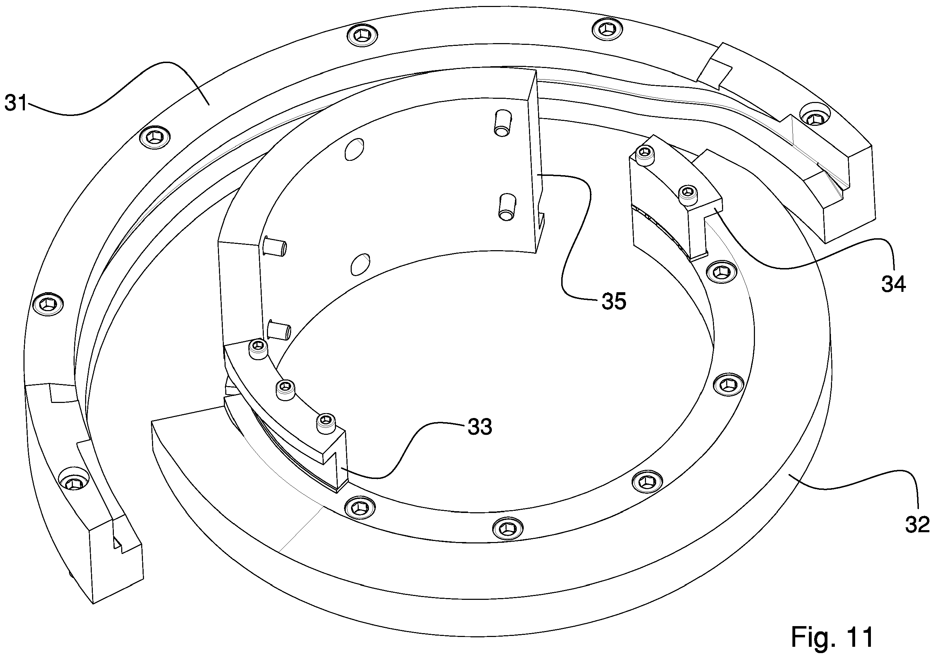

Figure 11 is a perspective view of the cam profiles that guide the movement of the various forming half units in the apparatus of figure 7.
Figures 12A and 12B show schematically two possible adjustments of the movement system of the first forming half unit of the forming apparatus of figure 7.
Figure 13 is a section, with a vertical section plane, of the second forming half unit of the forming apparatus of figure 7.
Figure 14 is a perspective view of the capsule support with the extracting device of the first forming half unit of the apparatus of figure 7.
Figures 15A, 15B, 15C and 15D show four sequence steps of the entry of a capsule into the capsule support of figure 14.

### Detailed description

With 1 overall a machine for compression moulding plastics has been indicated. In particular, the moulding machine 1 is usable for moulding doses of plastics taken from an extruder. The machine may be used, as in this case, for forming seals on the bottom of capsule C to close containers. The capsules C may be made (for example by drawing) of a plastically deformable material, in particular of a metal material, for example aluminium. Each capsule C may have a side wall (for example cylindrical) closed on one side (by a bottom, for example a flat bottom, in particular of circular shape) and open on the other side. The capsules may comprise, for example, a side wall of relatively high height, for example greater than 30, 40 or 50 millimetres. In this example each capsule has a side wall of about 60 millimetres in height.

In other cases the machine, equipped with appropriate moulds, may be used for compression-moulding other objects, for example capsules for containers or preforms for containers, in particular objects made of plastics or of plastically deformable material (for example metal), or of incoherent material (for example powder or granules for forming tablets), for example objects made by drawing or compression-moulding.

The machine 1 may comprise, as in this case, a capsule entry line 2 arranged for conveying the capsules C in a line one after another. In the specific case the capsules C advance, at least partially, in a straight line. At the entry the capsules C may advance, as in this embodiment, in contact with one another and then be spaced apart from one another (for example at a preset rate, in particular a constant rate). In the embodiment disclosed here, the capsules C are conveyed (along the entire machine 1) with the opening facing upwards and the bottom arranged downwards, in particular resting on a conveying plane.

The machine 1 may comprise, as in this embodiment, a first conveying star 3, in particular rotating around a (vertical) rotating axis. The first conveying star 3 is arranged for receiving the capsules C from the capsule entry line 2 and for conveying the capsules C along a first arcuate path (substantially a circumference arc path).

This first arcuate path of the capsules C may be, in particular, a path that extends angularly (from the capsule entrance in the first conveying star 3 to the capsule exit) with an angle greater than 180° around the rotating axis of the first conveying star 3. In this first arcuate path the capsules C may be spaced apart from one another (at a constant rate).

The machine 1 may comprise first heating means 4 for heating the capsules C along the first arcuate path, whilst the capsules C are conveyed from the first conveying star 3. The first heating means 4 may comprise, for example, an electromagnetic induction heating unit (in particular a known induction unit).

The first heating means 4 may extend in a circumferal manner, around the rotating axis of the first conveying star 3, for a fraction of the first arcuate path which is greater than 40%, or 50%, for example about the same as (or greater than) 60%, of the total of the first arcuate path.

The machine 1 may comprise a dose insertion carousel 5, for example rotating around a (vertical) rotating axis. The dose insertion carousel 5 may be arranged for receiving the capsules C (preheated by the first heating means 4) exiting the first conveying star 3 and for conveying the capsules C along a second arcuate path (for example a substantially circular arc path).

This second arcuate path of the capsules C may be, in particular, a path that extends angularly (from the capsule entrance in the dose insertion carousel 5 to the capsule exit) with an angle "α" that is greater than 180° around the rotating axis of the dose insertion carousel 5.

The machine 1 may comprise an extruder 6 for plastics having at least one nozzle 7 arranged near of the dose insertion carousel 5. This nozzle 7 may be arranged, in particular, in a zone of the carousel 5 outside the second arcuate path, for example at a portion of the circumference on which the second arcuate path is arranged that is not, however, the circumference portion (arc) intended for the passage of the capsules, being thus outside the second arcuate path. The nozzle 7 may have, as in this case, an outlet of the plastics facing upwards.

The dose insertion carousel 5 may comprise, as in this embodiment, separating means, carried by the rotating frame of the carousel 5 to separate doses of plastics exiting the nozzle 7 of the extruder 6. This separating means may comprise, for example, a plurality of removing members 8 arranged spaced angularly apart from one another (by a pitch that is the same as the circumferal pitch that the capsules will have on the carousel 5). During rotation of the carousel 5, each removing member 8 passes in front of the exit of the nozzle 7, separating a dose of plastics from the continuous flow of plastics exiting the nozzle 7. Each removing member 8 may comprise, in particular, a concave body (for example U-shaped) momentaneously containing the dose of plastics. This removing member 8 may be opened frontally (to enter into the flow of plastics exiting the extruder 6 during the step of separating the dose) and opened below (to expel the dose during the step of inserting the dose into the capsule C).

The dose insertion carousel 5 may comprise, as in this embodiment, inserting means, carried by the carousel 5, for inserting the doses (momentaneously carried by the separating means) inside the capsules C conveyed by the carousel 5. This inserting means may comprise, for example, thrust means (for example of the air jet type) for pushing downwards (above the bottom of the capsule beneath) the dose contained in a removing member 8.

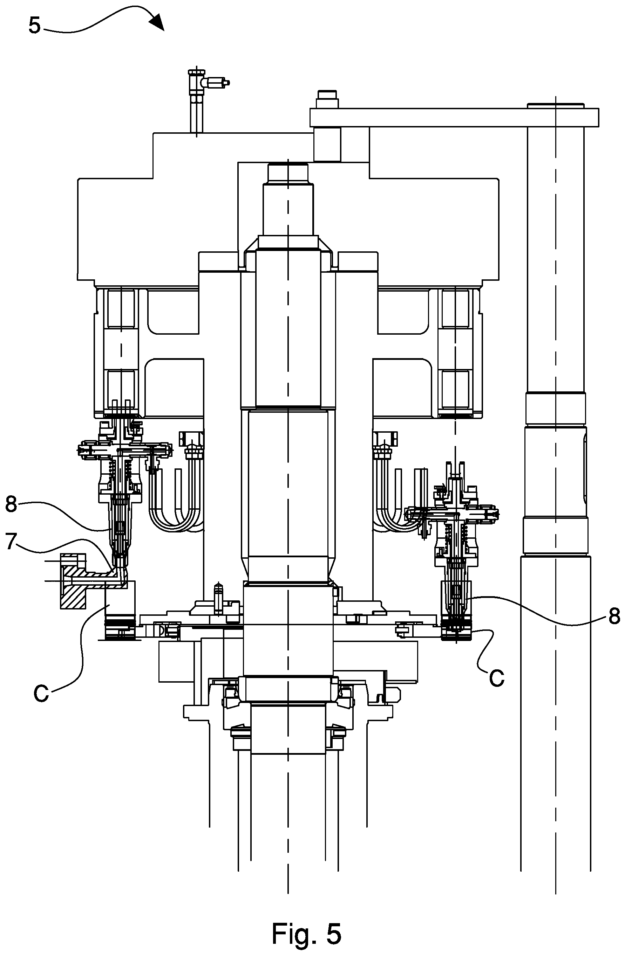

Each removing member 8 may be (vertically) movable at least between a distant position - upper position, of non encumbrance with respect to the capsule C, for example the position to the left of the figure 5, in which the member 8 passes in front of the exit of the extruder 6 to separate the dose, so that a capsule C, entering the dose insertion carousel 5, can be positioned below the removing member 8 - and a (near) lower position in which the removing member 8 is inserted inside the cavity of the capsule C (through the opening of the capsule C facing upwards) and is located near the bottom of the capsule to release the dose (for example the position to the right of figure 5).

The machine 1 may comprise a second rotating conveying star 10 arranged for receiving the capsules C (containing the doses to be compression moulded to form the seals) exiting the dose insertion carousel 5. The second conveying star 10 is rotatable around a (vertical) rotating axis.

The second conveying star 10 is arranged for conveying the capsules C along a third arcuate path (substantially a circumferal arc). This third arcuate path of the capsules C may be, in particular, a path that extends angularly (from the capsule entrance to the capsule exit of the second conveying star 10) with an angle that is greater than 180° around the rotating axis of the second conveying star 10.

The second conveying star 10 may comprise, as in this case, two rotating discs 11 (that are integral with one another) arranged on top of one another at a certain mutual distance. Each disc 11 may have a plurality of (concave) seats arranged at a pitch in a circumferal manner to house the capsules C. Each seat may comprise a recess shaped for shape coupling with an object (capsule C) to be conveyed. In particular, the recess of each seat may have, in the plan view, a substantially circumference arc form.

Each seat of a disc 11 is configured for receiving (in contact) a portion di capsule cooperating together with a respective seat of the other disc 11. In particular, each seat of the upper disc 11 may match an underlying seat of the lower disc 11, so that each object (capsule C) may be simultaneously received by two seats that collaborate with one another so that the upper seat receives (in a shapingly coupled manner) an upper portion of the capsule C and the lower seat receives (in a shapingly coupled manner) a lower portion of the capsule C.

The second conveying star 10 could comprise a (fixed) conveying plane on which the capsules C, whilst they are dragged forwards by the two rotating discs 11, may be slidably rested, or may advance above the plane without contact with the plane.

The second conveying star 10 may comprise vacuum gripping means that acts laterally on the objects (capsule C) in at least two lateral zones of the objects situated at different heights. In particular, each seat may be connected with sucking means (for example a pumping device for creating a vacuum) for retaining the object with a pneumatic grip. In particular, with each seat a sucking conduit (connected to the sucking means) may be associated that leads with an opening 12 into the seat to perform a gripping action with a vacuum on the side wall of the capsule C. Thus, on the side wall of each capsule C at least two sucking conduits (one for each disc 11) may operate that are arranged at two different heights of the capsule.

The first conveying star 3 disclosed above may also comprise, like the second conveying star 10, vacuum gripping means that acts laterally on the objects (capsule C) in at least two lateral zones of the objects situated at different heights. In particular, the gripping means of the first conveying star 3 may be the same as those of the second conveying star 10.

The machine 1 may comprise second heating means 9 for heating the capsules C, containing the doses, along the third arcuate path, whilst the capsules are conveyed by the second conveying star 10. The second heating means 9 may comprise, for example, an electromagnetic induction heating unit. The second heating means 9 may extend in a circumferal manner, around the rotating axis of the second conveying star 10, for a fraction of the third arcuate path that is greater than 40%, or 50%, for example about the same as (or greater than) 60%, of the total of the third arcuate path.

In the dose insertion carousel 5, the (vertical, ascent and descent) stroke of each removing member 8 between the distant position and the near position, in both directions, may be relatively high, especially if the capsules C, as in this case, have relatively high lateral walls (for example about 60 millimetres).

The fact of having located the heating means on the first arcuate path and/or on the third arcuate path of the capsules (i.e. upstream and/or downstream of the second arcuate path travelled by the capsules in the dose insertion carousel 5), enables, along the second arcuate path, a relatively high portions of capsule path to be obtained that is available for performing the (axial ascent and descent) stroke of the members provided for removing the doses from the extruder and depositing the doses in capsules. In this manner, the dose insertion carousel 5 can have relatively reduced dimensions, simultaneously permitting a relatively high (axial) stroke of the removing/depositing members.

The machine 1 comprises a forming apparatus 13, of the carousel type, arranged for receiving the capsules C, containing the doses to be moulded, exiting the second conveying star 10. The forming apparatus 13 has a forming carousel rotating around a (vertical) rotating axis. The forming carousel is arranged for conveying the capsules C along a fourth (substantially circular arc) arcuate path.

The fourth arcuate path of the capsules may be, in particular, a path that extends angularly (from the capsule entrance to the capsule exit of the forming apparatus 13) with an angle greater than 180° (or 210°, or 240°, or 270°, for example comprised between 270° and 300°) around the rotating axis of the forming carousel.

In the forming carousel, whilst the capsules C traverse the fourth arcuate path, the doses, which had been previously deposited inside (on the bottom of) the capsules C, are compression-moulded to form the seals, as will be explained better further on in the present description.

The machine 1 may comprise a third conveying star 14 rotating around a (vertical) rotating axis. The third conveying star 14 is arranged for receiving the capsules C, with the formed seals inside, exiting the forming apparatus 13 and for conveying the capsules along a fifth arcuate path.

The third conveying star 14 may comprise, thus like the second conveying star 10, vacuum gripping means that acts laterally on the objects (capsules) in at least two lateral zones of the objects situated at different heights. In particular the capsule gripping means of the third star14 may be the same as those of the second star 10.

The machine 1 may comprise a capsule exiting line 15 arranged for receiving the capsules C exiting the third conveying star 14 and configured for conveying the capsules C aligned one after another (for example in a straight line) to an exit of the moulding machine 1. In the specific case the capsules C aligned along the exiting line 15 are arranged at a certain distance (pitch) from one another.

The capsule exiting line 15 may comprise, for example, a belt conveyor having an endless movable flexible conveying element with a (horizontal) sliding upper branch on which the capsules C rest that advance towards at least one exit. The belt conveyor may comprise, for example, sucking means for generating a vacuum that is suitable for retaining the capsules on the conveyor belt.

The machine 1 may comprise inspection means arranged near the third conveying star 14 and/or the exiting line 15 to check the integrity or the lack of faults of the capsules C and of the corresponding seals.

This inspection means may comprise, for example, inspection video means 16 arranged for detecting at least one image of the capsules and/or of the seals.

The aforesaid inspection video means may comprise, in particular, at least three or four video cameras arranged around an inspection zone arranged in the exiting line 15.

The inspection video means 16 of the capsules may comprise, for example, an optical inspection apparatus like one of those disclosed in patent application WO 2011/013153, used in this case for checking, in particular, the absence of faults on the external side wall of the capsules.

The inspection means may comprise first (optical) inspection means arranged for controlling the exterior of the bottom wall of the capsules (i.e. the lower side of the capsules, as in this case the opening of the capsules faces upwards) and/or second (optical) inspection means arranged for controlling the inside of the bottom wall of the capsules (in particular the wholeness of the seals arranged on the bottom). The first inspection means and/or the second inspection means may be arranged, for example, before the lateral inspection video means 16 (where "before" must be understood with reference to the advancement direction of the capsules along the path on the forming machine), on the third conveying star 14 or on the capsule exiting line 15.

The first inspection means may be used, in particular, to check the wholeness of a decoration arranged on the external of the bottom of the capsules C.

The capsule exiting line 15 may comprise, as in this embodiment, a plurality of distinct exits for the capsules C. In particular, it is possible to provide at least one main exit O1 for the capsules without defects or faults that can continue to other workstations (for example for packaging containers), and/or at least one first secondary exit 02 for selecting a sample of capsules, and/or at least one second secondary exit 03 for expelling defective capsules on the side wall (in particular capsules found to be defective by the lateral inspection video means 16), and/or at least one third secondary exit 04 for expelling defective capsules on the exterior of the bottom (in particular capsules found to be defective by the first inspection means), and/or at least one fourth secondary exit 05 for expelling defective capsules in the seal (in particular capsules found to be defective by the second inspection means).

The second, third and fourth secondary exit, respectively 03, 04 and O5, may be arranged before the main exit O1 and/or before the first secondary exit 02 (always with reference to the advancement direction of the capsules C). The first secondary exit 02 may be arranged before the main exit O1.

At the first 02 and/or the second 03 and/or the third 04 and/or the fourth secondary exit 05 a container for collecting the exiting capsules C may be arranged, so that each container can be filled with capsules belonging to a specific category: sampled capsules, capsules with defects on the side wall, capsules with defects on the exterior of the bottom (for example defects in the possible decoration of the exterior of the flat part of the capsule), capsules with defects in the seal.

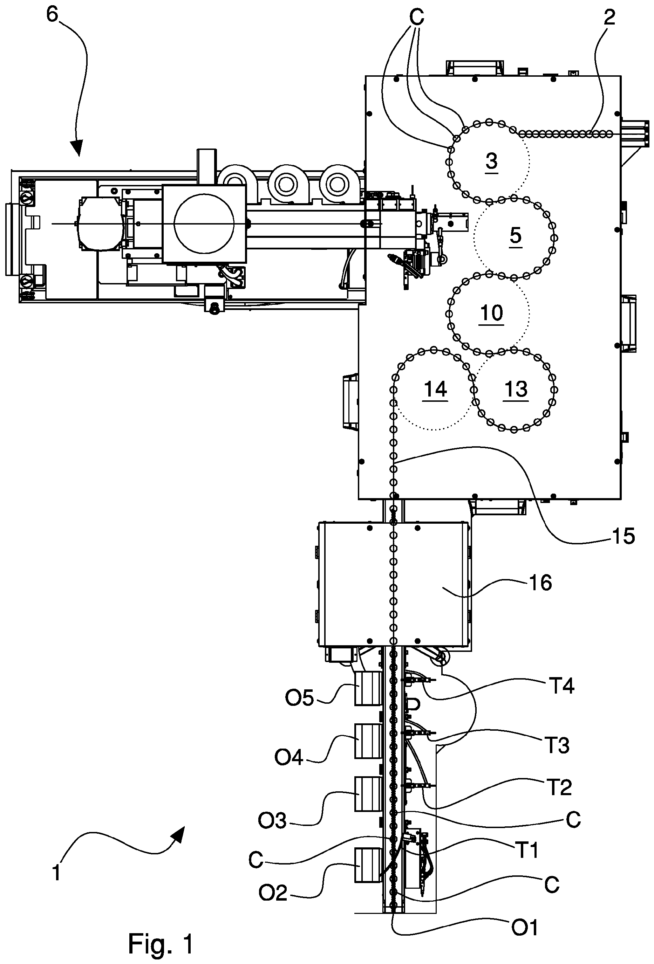

The capsule exiting line 15 may be provided, in particular, with a plurality of expelling means (indicated with T1, T2, T3 and T4 in figure 1) arranged for expelling the capsules C to the respective secondary exits 02, 03, 04 and O5.

The forming machine 1 is provided with control means (in particular programmable electronic control means) for controlling the actuators of the machine 1. This control means may be connected to the inspection sensor means of the capsules and may be moreover connected to the capsule removing means arranged on the exiting line 15 to control these removing means according to a set basic control logic. In particular, the machine 1 may comprise computer programme instructions implemented on the control means to expel the capsules in a selected manner to the various secondary exits 03, 04 and O5, according to the signals send by the various inspection means (on the side wall, on the interior of the bottom, on the exterior of the bottom), by acting on the respective expelling means T2, T3 and T4.

The computer programme instructions may be able to sample the capsules, by expelling capsules C to the first secondary exit 02, at preset intervals, by the expelling means T1.

The forming apparatus 13 is disclosed in greater detail below with reference to the figures started from 7.

The forming apparatus 13 has a frame 20 rotating around the (vertical) rotating axis. The carousel has a plurality of compression-forming units 21 arranged on the frame 20 spaced angularly apart from one another around the rotating axis.

The forming apparatus 13 may comprise a path for objects inside the forming carousel (that may be the aforesaid fourth arcuate path). The objects may be the capsules C including the doses of plastics (at least one dose for each capsule C) deposited on the bottom of the capsules and intended to form the seals. This path inside the forming apparatus 13 may thus comprise an entry of objects to be formed (for example the doses inside the capsules) and an exit of formed objects (the seals inside the capsules). In the specific case the forming units 21 mould the doses of plastics directly inside the capsules C, whereas the capsules are not subject to forming.

The forming apparatus 13 may comprise, for each forming unit 21, a first half unit 22 and a second half unit 23 that are capable of a reciprocal approaching movement to close the forming unit with a compression force, exerted between the two aforesaid half units 22 and 23, that is suitable for forming an object (the seal) whilst it traverses the path inside the forming carousel.

In the specific case, the first half unit 22 is arranged below the second half unit 23, which is arranged above. The (lower) first half unit 22 and the (upper) second half unit 23 may be moreover able to perform a reciprocal distancing movement to open the forming unit and thus enable the formed object (the seal together with the capsule) to be expelled at the end of the path in the forming carousel.

The closing (approaching one another) movements and opening (moving away from one another) movements may be linear movements, in particular axial movements (i.e. parallel to the rotating axis of the forming carousel). These closing and opening movements, for each forming unit 21, follow a work cycle (commanded by cam means, as will be explained better below) that is repeated at each complete revolution of the carousel around its rotating axis.

It is possible to provide, as in the specific case, for at least the first (lower) half unit 22 (carrying the capsule C) being movable (at the command of driving actuating means) with respect to the frame 20 of the carousel to permit the aforesaid (axial) opening and closing movements of the forming unit.

It is further possible, as in the specific case, for at least the second (upper) half unit 23 to be provided with at least one elastically movable part and with another (fixed) part that may remain substantially integral with the frame 20 of the carousel during forming and/or may not perform axial movements with respect to the frame 20 during opening or closing of the forming unit.

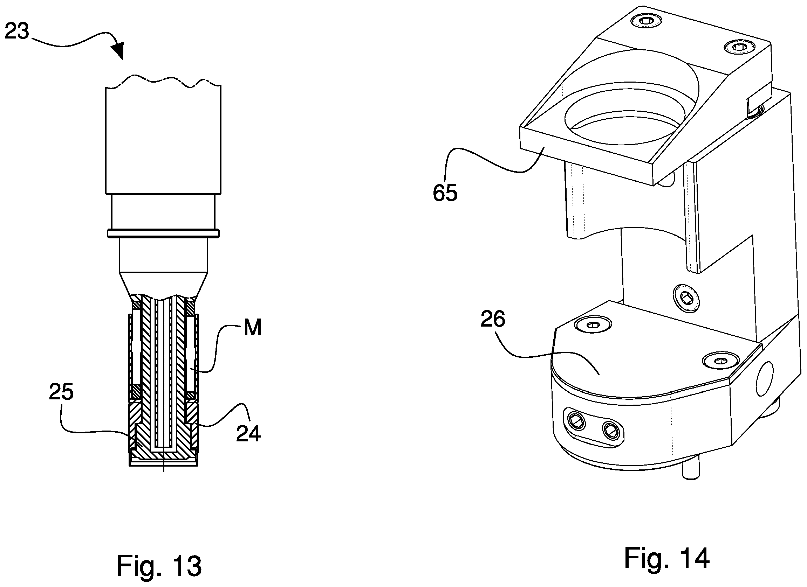

The elastically movable part may comprise, for example, a tubular portion 24 (see figure 13) that enters the capsule C defining the external side wall of the forming cavity of the seal. The tubular portion 24 may be (axially) movable with an elastic return under the action of elastic means M. The fixed part may comprise, for example, a punch 25 that enters the capsule C to compression-mould the plastics, defining the upper wall of the forming cavity of the seal. In the specific case the lower wall of the forming cavity is defined, at least one in part, by the bottom of the capsule C.

The first (lower) forming half unit 22 comprises, in the specific case, a base or support 26 arranged for receiving as a rest the capsules C inside which the seals will have to be formed. The support 26 may be arranged, as in this case, on the top of the first forming unit 22. The capsules C are received, in this specific case, with the opening facing upwards and the bottom resting on the support 26. Each first forming half unit 22 may comprise, for example, a main cursor that is slidably coupled with the frame 20 of the carousel. The main cursor may slide in a linear (vertical) sliding direction. The main cursor may have, for example, a (cylindrical or prismatic) body axially slidable within a (cylindrical or prismatic) sliding seat.

With each first half unit 22 at least one movable auxiliary member 28 is associated that may comprise, as in this case, an auxiliary cursor that is slidably coupled with the frame 20 of the carousel. The auxiliary member 28 may slide, in particular, in a linear sliding direction parallel to that of the main cursor of the first half unit 22. The auxiliary member 28 may have, for example, a (cylindrical or prismatic) body axially slidable within a (cylindrical or prismatic) sliding seat.

The movable auxiliary member 28 (auxiliary cursor) is connected to the respective first half unit 22 (in particular to the main cursor) by a motion transmission mechanism arranged in such a manner that a movement by a certain amount of the auxiliary member 28 (called for the sake of convenience "auxiliary movement") is matched by another movement, by a larger amount, of the first half unit 22 (called for the sake of convenience "main movement").

The aforesaid motion transmission mechanism may comprise a lever mechanism shaped and arranged so as to make a mechanism that is, in effect, a motion multiplier, i.e. is such that the main movement of the first half unit 22 is greater (with a determined transmission ratio) of the corresponding auxiliary movement of the auxiliary member 28.

The forming apparatus 13 comprises at least one first cam profile 31 (for example a bilateral cam profile) and at least one second cam profile 32 (for example a unilateral cam profile) arranged respectively along a first circumference sector and along a second circumference sector, around the rotating axis of the forming carousel.

With each first half unit 22, as in this case, at least one first cam follower 41 may be mounted on the auxiliary member 28. At each rotation of the frame 20 of the carousel, the first cam follower 41 couples with the first cam profile 31 to command at least one first closing step of the forming unit (in the absence of compression force that is suitable for forming the seal). The first closing step comprises, in particular, at least one first rapid approaching part for making the first (axially movable) half unit 22 approach rapidly the second half unit 23 (which can be considered to be axially fixed).

In the specific case the aforesaid first rapid approaching part is caused, through the motion multiplying mechanism, by a preset auxiliary movement of the auxiliary member 28 guided by the first cam profile 31.

With each first half unit 22 there may be associated, as in this case, at least one second cam follower 42 mounted on the first half unit 22 (in particular on the main cursor) that bears the capsule C.

At each rotation of the frame 20 of the carousel, the second cam follower 42 becomes coupled with the second cam profile 32 to command at least a second closing step of the forming unit 21 (in the presence of a compression force that is suitable for forming the seal). At each closing cycle (there will be a closing cycle for each revolution of the forming carousel), the second closing step (compression step) will then follow the first closing step (rapid closing step).

The compression force generated between the two forming half units 22 and 23 to compress and form the seal may be discharged, at least partially, on the second cam profile 32 (through the second cam follower 42) during the second closing step.

With each forming cycle, in particular during the second closing step (compression step), the second cam follower 42 is coupled with the second cam profile 32 to command at least one second approaching part (of a lesser amount than the first approaching part for which the first cam profile 31 is responsible) of the first half unit 22 to the second half unit 23. The first half unit 22, when it performs the second approaching part, is nearer the second half unit 23 with respect to when it performs the first approaching part.

The motion multiplying mechanism may comprise, as in the specific article, a rocker 50 (oscillating rod, in particular with an oscillation motion that is rotatable around least one rotation pine) that may be connected to a portion of the rotating frame 20 of the carousel. In particular the rocker 50 may have a first portion articulated with a first pin 51 on the first half unit 22 (main cursor), a second portion articulated with a second pin 52 on the portion of frame 20, and a third portion interposed between the first portion and the second portion and articulated with a third pin 53 on the auxiliary member 28 (auxiliary cursor). It is possible to provide, as in this embodiment, for at least two of the aforesaid three pins (for example the first pin 51 and the pin 52) being movable within two respective slots (obtained on the rocker 50).

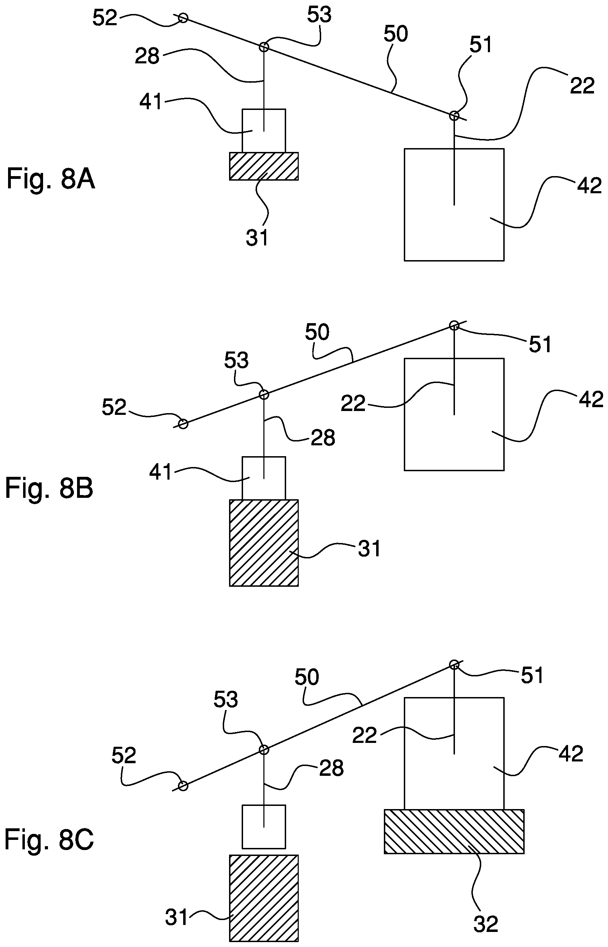

In figures 8A to 8C the motion multiplication effect is shown schematically that is caused by the rocker 50 during closing of the forming unit 21 (ascent of the first lower half unit 22). At the start of closing there is a first rapid closing step (ascent) (movement from the configuration of figure 8A to that of figure 8B) in which the auxiliary member 28 moves (upwards) guided by the first cam profile 31. The first half unit 22 (main cursor) carrying the capsule C will accordingly move (upwards) by a larger amount than the movement of the auxiliary member 28 (according to a transmission ratio that is the same, as known, as the ratio between the arms of a rocker lever), as is clear from the figures. In this rapid movement step the second cam follower 42, associated with the first half unit 22, is not coupled with the second cam profile 32.

Subsequently, the second cam follower 42 will be coupled with the second cam profile 32 (figure 8C), whilst the first cam follower 41 may have exited from the first cam profile 31 or no longer be coupled therewith. In this configuration the forming unit 21 is closed definitively, with a consequent generation of the compression force that will form the seal. This compression force will be discharged on the second cam profile 32, which may be constructed with a stronger and more robust structure than the first cam profile 31.

With each first half unit 22 there may be associated, as in this case, at least one third cam follower 43 mounted on the respective first half unit 22 (in particular on the main cursor) and coupled with a third cam profile 33 (for example a unilateral cam profile) to command at least one first opening step of the forming unit 21 (with detachment from the upper punch carried by the second forming half unit 23). This first opening step may comprise, for example, at least one first distancing step of the first half unit 22 from the second half unit 23, after the seal has been formed.

It is possible to provide, as in this embodiment, for the first cam follower 41 being coupled with the first cam profile 31 (during a fraction of the complete revolution of the carousel) to command at least one second opening step of the forming unit 21 which, at each opening cycle, is successive to the aforesaid first opening step. This second opening step may comprise, in particular, at least one second (rapid) distancing part of the first half unit 22 from the second half unit 23 during which the first half unit 22 is further from the second half unit 23 with respect to when it performs the first distancing step.

At each rotation of the frame 20 of the carousel, the third cam follower 43 may become coupled with a fourth cam profile 34 (for example a unilateral cam profile) that may be at least partially interposed with a circumferal extent between the first cam profile 31 and the second cam profile 32, to command a movement of the first half unit 22 in a transition step from the first closing step to the second closing step.

The forming apparatus 13 may comprise, as in the disclosed embodiment, a first damping means 29, which is in particular operationally associated with the first half unit 22, arranged for damping a sharp movement of the first half unit 22 due to a possible jump of the first cam follower 41 at a first dead centre (for example a lower dead centre) of the first cam profile 31.

The first damping means 29 (for example of the fluid type) may be arranged so as to tend to close the first forming half unit 22, i.e. so as to bring the first forming half unit 22 towards the second half unit 23 (in this case to push the first forming half unit 22 upwards).

The forming apparatus 13 may comprise, as in this specific case, second damping means 30, in particular applied to the auxiliary member 28, arranged for damping a sharp movement of the auxiliary member 28 due to a possible jump of the first cam follower 41 at a second dead centre (for example an upper dead centre) of the first cam profile 31.

The second damping means 30 may be, for example, arranged in such a manner as to tend to open first forming half unit 22, i.e. to move the first forming half unit 22 away from the second half unit 23 (in this case push the first half unit 22 downwards).

Owing to the damping means 29 and 30, it is possible to reduce or eliminate the drawbacks due to jumps of the first forming half unit 22 (which carries the capsule) at the dead centres of the first cam profile 31 which guides the rapid ascent of the first half unit 22. Such jumps can be caused, in particular, by the plays in the leverage system (including the rocker 50) arranged between the first cam profile 31 for the rapid ascent and the first forming half unit 22 that carries the capsule C.

In the specific case two damping means 29 and 30 have been used, one for each dead centre of the first cam profile 31, in particular one (directly) applied to the auxiliary member 28 and the other (directly) applied to the first half unit 22 that carries the capsule C. It is possible to provide, in other embodiments that are not illustrated, two damping means that are both applied (directly) to the auxiliary member 28 or are both applied (directly) to the first half unit 22.

The forming apparatus 13 may comprise, for each first forming half unit 22, at least one fifth cam profile 35 (for example a bilateral cam profile) applied to the third cam follower 43 (as in this case), or coupled with a fourth cam follower mounted on the respective first half unit (in an embodiment that is not illustrated), to guide the first half unit 22 at least one in a fraction of the complete revolution of the carousel at which one step of entry of the object (capsule C) occurs so that the first half unit 22 has its own (horizontal) object (capsule C) receiving plane located in a desired (substantially coplanar) position with respect to a (horizontal) entry plane of the object (capsule) in the first half unit 22 (in particular the receiving plane may be defined by the upper surface of the support 26).

The fifth cam profile 35 may be used, for example, to limit the recovery of the plays (in particular the plays due to wear, the recovery of the plays being effected in particular by the action of the first damping means 29, which tends to push the first forming half unit 22 upwards, moving upwards also the capsule receiving plane), so as to prevent excessive play recovery causing an incorrect entrance (with shocks and/or jumps) of the object in the receiving plane, or even preventing this entry.

Each first forming half unit 22 may comprise, as in this embodiment, an antirotation device to prevent the main (cylindrical) cursor rotating on itself. This antirotation device may comprise, in particular, a protrusion 61 that is movable (slidable) inside a groove 62 that extends parallel to the (vertical) movement direction (descent and ascent) of the main cursor. During the stroke of the first forming half unit 22 to open and/or close the forming unit (upwards and/or downwards), the protrusion 61 is maintained coupled inside the groove 62 impeding any possible rotation on itself of the main cursor. The protrusion 61 may be integral with the vertically movable main cursor and the groove 62 may be integral with the frame 20 of the carousel (as in this case), or vice versa. The protrusion 61 may comprise, as in this embodiment, a roller or other element that is rotatable in an idling manner.

Each cam follower 41, 42, 43 may comprise, in particular, a roller or other element that is rotatable in an idling manner. Each cam profile 31, 32, 33, 34, 35 may comprise, for example, a (bilateral or unilateral) track for rollers.

The forming apparatus 13 may comprise, as in this embodiment, an adjusting device for adjusting a distance between the first cam follower 41 and the second cam follower 42, so as to recover the differences that (inevitably) occur between the various forming units 21 following the different tolerances of the various mechanical components of the same units so as to ensure, once the adjustment has been carried out, uniform and regular operation for all the forming units 21 during rotation of the carousel.

The adjusting device may comprise, for example, at least one eccentric member 63 coupled with the portion of frame 64 that carries the motion multiplying mechanism (rocker 50). Adjusting the eccentric member 63 enables the position of the aforesaid portion of frame 64 and thus the position of the end of the motion multiplying mechanism connected to this portion to be varied (the connected motion multiplying mechanism being connected by an articulating pin). The adjusting device may be interposed between the motion multiplying mechanism (rocker 50) and the rotating frame 20 of the carousel.

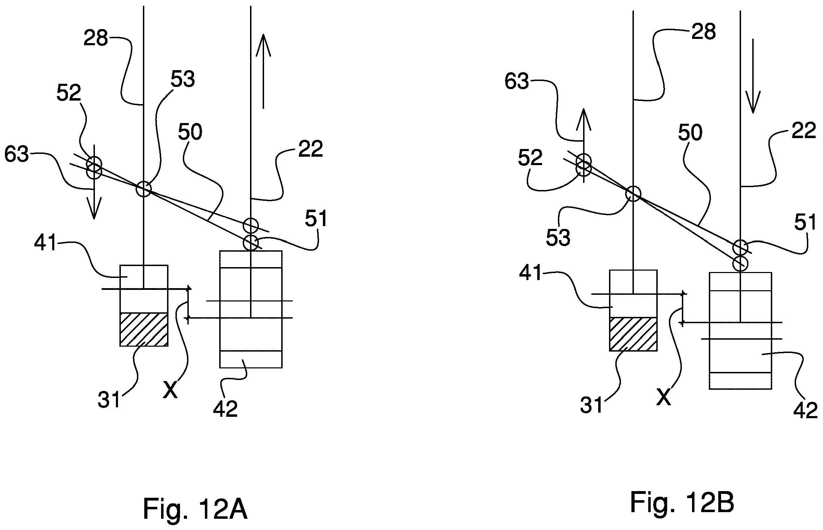

In figures 12A and 12B the adjustment performed by the eccentric member 63 is illustrated schematically. Rotating the eccentric member 63 in one direction it is possible to move the eccentric member 63 downwards (figure 12A) and thus move downwards the articulation zone between the rocker 50 and the frame 20, with consequent movement upwards of the first half unit 22 (a movement that is amplified by the motion transmission ratio supplied by the ratio of the rocker lever arms 50), leaving, for example, unchanged the position of the fulcrum of the rocker (the cam follower 41 of the articulation zone between the rocker 50 and the auxiliary member 28 being engaged in the corresponding cam profile 31). In this manner the distance X between the axis of the cam follower 41 of the auxiliary member 28 and the axis of the cam follower 42 of the first half unit 22 is reduced.

Rotating the eccentric member 63 in the opposite direction it is possible to rotate the eccentric member 63 upwards (figure 12B) so as to move upwards the articulation zone between the rocker 50 and frame 20, with a consequent movement downwards of the first half unit 22 (also this movement will be amplified by the transmission ratio supplied by the rocker 50), leaving, for example, still unvaried the position of the fulcrum of the rocker 50 (the third intermediate pin 53 coupled with the auxiliary member 28 the cam follower 41 of which is engaged in its cam profile 31). In this manner the distance X is increased between the axis of the cam follower 41 of the auxiliary member 28 and the axis of the cam follower 42 of the first forming half unit 22.

Each first half unit 22 may be adjusted in an appropriate manner so that the various cam mechanisms of all the first half units 22 are coupled in a precise and regular manner, in particular so that the cam follower 42 of the first half unit 22, that has to withstand the compression force, is coupled with precision with the corresponding cam profile 32.

In substance, the adjusting device (for example with an eccentric member 63), which adjusts the distance between the elements associated with the motion multiplier mechanism (rocker 50) (in the specific case it adjusts the distance X between the axes of the rollers that define the first and the second cam follower 41 and 42), is used to have in all the first forming half units 22 an optimum (gradual and regular) transition in the passage between the various cam profiles. By acting on the adjusting device (eccentric member 63) it is in fact possible to recover the constructional differences between the different forming units 21 that are due to the sum (in general different for each forming unit 21) of the tolerances of the various components of the units.

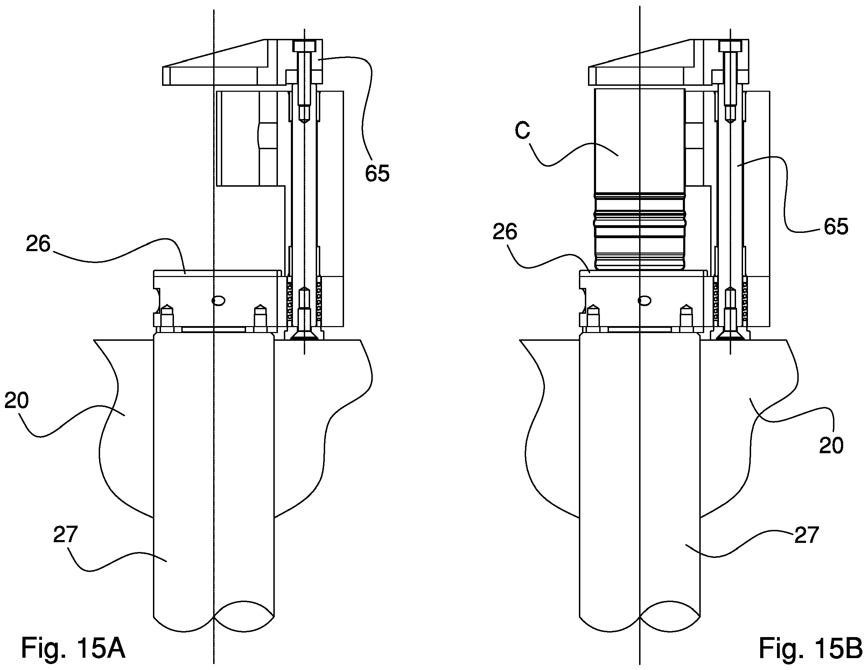

In figures 15A to 15D capsule insertion into a forming unit 21 is shown. In figure 15A the first (lower) half unit 22 is empty and has its receiving plane ready for receiving the capsule C that will subsequently arrive (figure 15B) from the second conveying star 10. In figure 15A the first half unit 22 moreover has an extracting device 65 in an open position, which is also ready for receiving the capsule. In figure 15B, with the extracting device 65 still open, the capsule C enters the forming carousel, conveyed, as is shown, from the second star 10 with pneumatic conveying by sucking means applied to the side of the capsule C. After which the first forming half unit (main cursor) starts its closing movement (ascent movement of the first half unit 22).

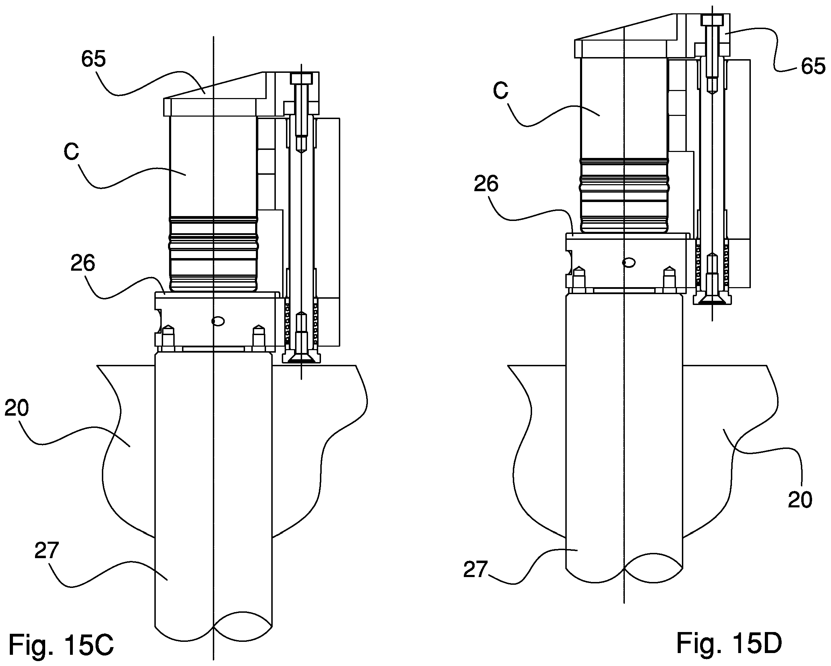

After a preset stroke (for example after about 2 or 3 millimetres from the start of closing) the extracting device 65 closes automatically (with an elastic system), locking the capsule C in position on the first half unit 22 (figure 15C). The first forming half unit 22 at this point can continue its stroke (ascent) towards the second half unit 23 (punch 25) with the capsule C locked (figure 15D). Once the seal is moulded, the extracting device 65 descends (in a known manner that is not illustrated in detail), performing its primary function, i.e. extracting the capsule C from the forming punch 25.

## Claims

1. Forming apparatus (13) comprising:
- a forming carousel having a frame (20) that rotates around a rotating axis and carries a plurality of forming units (21) that are angularly spaced apart from one another around said rotating axis;
- for each forming unit (21), a first half unit (22) and a second half unit (23) that are able to assume at least one closing position, wherein between said half units (22; 23) a compression force is generated that is suitable for forming an object, and at least one open position, wherein it is possible to introduce an object to be formed and expel a formed object, said half units (22; 23) being able to perform at least one reciprocal approaching movement to close the forming unit (21) and a reciprocal distancing movement to open the forming unit (21), at least said first half unit (22) being movable with respect to said frame (20);
- for each first half unit (22), at least one movable auxiliary member (28) connected to said first half unit (22) by motion multiplying transmission means (50) arranged such that an auxiliary movement of said auxiliary member (28) by a certain amount is matched by a main movement of said first half unit (22) by a larger amount;
- for each first half unit (22), a first cam follower means (41) associated with said auxiliary member (28), at each rotation of the carousel said first cam follower means (41) being coupled with first cam means (31) to command at least one first closing step of the forming unit (21) with an approach of said first half unit (22) to said second half unit (23) caused by an auxiliary movement of said auxiliary member (28) guided by said first cam means (31);
- for each first half unit (22), a second cam follower means (42) associated with said first half unit (22), at each rotation of the carousel said second cam follower means (42) being coupled with second cam means (32) to command at least a second closing step of the forming unit (21), in the presence of the compression force that is discharged at least partially onto said second cam means (32) during said second closing step.

2. Apparatus according to claim 1, wherein said transmission means comprises a motion multiplying mechanism (50) connected to said auxiliary member (28) and to said first half unit (22).

3. Apparatus according to claim 1 or 2, comprising said first cam means and said second cam means which respectively comprise at least one first cam profile (31) and at least one second cam profile (32) arranged respectively along a first circumference sector and a second circumference sector around said rotating axis.

4. Apparatus according to claim 3, wherein said first cam follower means comprises at least a first cam follower (41) mounted on said auxiliary member (28) and coupled with said first cam profile (31) to command said first closing step in the absence of the compression force.

5. Apparatus according to claim 3 or 4, wherein said second cam follower means comprises at least one second cam follower (42) mounted on said first half unit (22) and coupled with said second cam profile (32) to command said second closing step of the forming unit (21) in the presence of the compression force, at each closing cycle said second closing step being successive to said first closing step; in particular wherein, during said second closing step, said second cam follower (42) is coupled with said second cam profile (32) to command at least a second approaching part of said first half unit (22) to said second half unit (23); in particular wherein said first half unit (22), when it performs said second approaching part, is nearer said second half unit (23) with respect to when it performs said first approaching part.

6. Apparatus according to any preceding claim, wherein said transmission means comprises a rocker (50) connected to said auxiliary member (28), to said first half unit (22) and to a portion (64) of said frame (20); in particular wherein said rocker (50) has a first portion articulated by a first pin (51) with said first half unit (22), a second portion articulated by a second pin (52) with said portion (64) of frame, and a third portion interposed between said first portion and said second portion and articulated by a third pin (53) with said auxiliary member (28); in particular wherein at least two of said three pins are movable within two respective slots.

7. Apparatus according to any preceding claim, comprising at least third cam follower means (43) associated with said first half unit (22) and coupled with third cam means (33) to command at least a first opening step of said forming unit (21) comprising at least a first distancing part of said first half unit (22) from said second half unit (23); in particular wherein said first cam follower means (41) is coupled with said first cam means (31) to command at least a second opening step of said forming unit (21) that at each opening, is successive to said first opening step, said second opening step comprising at least a second distancing part of said first half unit (22) from said second half unit (23), during said second distancing part said first half unit (22) being further from said second half unit (23) with respect to when it performs said first distancing part.

8. Apparatus according to any preceding claim, wherein, at each rotation of the frame (20) of the carousel, at least one cam follower associated with said first half unit (22) is coupled with fourth cam means (34) extending at least in part circumferally between said first cam means (31) and said second cam means (32) to guide said first half unit (22) in a transition step between said first closing step and said second closing step.

9. Apparatus according to any preceding claim, comprising first damping means (29), applied in particular to said first half unit (22), arranged for damping a sharp movement of said first half unit due to a possible jump of said first cam follower means (41) at a first dead centre of said first cam means (31); in particular wherein said first damping means (29) is arranged so as to tend to close said first half unit (22).

10. Apparatus according to any preceding claim, comprising second damping means (30), applied in particular to said auxiliary member (28), arranged for damping a sharp movement of said auxiliary member (28) due to a possible jump of said first cam follower means (41) at a second dead centre of said first cam means (32); in particular wherein said second damping means (30) is arranged so as to tend to open said first half unit (22).

11. Apparatus according to any preceding claim, wherein, at each rotation of the frame (20) of the carousel, at least one cam follower associated with said first half unit (22) is coupled with fifth cam means (35) to guide said first half unit (22) at least in one step of entry of the object (C) into the first half unit so that said first half unit (22) has its own object receiving plane located in a desired reference position with respect to an entry plane of the object into the first half unit, to limit a movement of the first half unit (22) from a reference position; in particular wherein said movement of the first half unit (22) from a reference position is caused by a clearance recovery device such as to prevent a clearance recovery inhibiting correct entry of the object into the receiving plane.

12. Apparatus according to any preceding claim, wherein said auxiliary member (28) comprises a cursor coupled slidably with said frame (20) in a sliding direction parallel to said rotating axis and to a sliding axis of said first half unit (22).

13. Apparatus according to any preceding claim, comprising an adjusting device for adjusting a distance between said first cam follower means (41) and said second cam follower means (42) in such a manner as to recover the differences between the forming units (21) following the different tolerances of the mechanical components.

14. Apparatus according to claim 13, wherein said adjusting device comprises at least one eccentric member (63) coupled with said motion multiplying transmission means (50).

15. Apparatus according to claim 13 or 14, wherein said adjusting device is interposed between said transmission means (50) and a portion (64) of said frame (20).

## Patentansprüche

1. Formungsvorrichtung (13) mit:
- einem Formungskarussell mit einem Rahmen (20), der sich um eine Drehachse dreht und eine Mehrzahl an Formungseinheiten (21) trägt, die voneinander um die Drehachse winkelbeabstandet sind;
- für jede Formungseinheit (21), einer ersten Halbeinheit (22) und einer zweiten Halbeinheit (23), die zumindest eine Schließposition, in der zwischen den Halbeinheiten (22; 23) eine Kompressionskraft erzeugt wird, die zum Formen eines Objektes geeignet ist, und zumindest eine Offenposition einnehmen können, in der es möglich ist, ein zu formendes Objekt einzuführen und ein geformtes Objekt auszustoßen, wobei die Halbeinheiten (22; 23) zumindest eine wechselseitige Annäherungsbewegung, um die Formungseinheit (21) zu schließen, und eine wechselseitige Beabstandungsbewegung ausführen können, um die Formungseinheit (21) zu öffnen, wobei zumindest die erste Halbeinheit (22) bezüglich des Rahmens (20) beweglich ist;
- für jede erste Halbeinheit (22), zumindest einem beweglichen Zusatzelement (28), das mit der ersten Halbeinheit (22) durch bewegungsvervielfachende Übertragungsmittel (50) verbunden ist, die derart angeordnet sind, dass eine Zusatzbewegung des Zusatzelements (28) um einen gewissen Betrag durch eine Hauptbewegung der ersten Halbeinheit (22) um einen größeren Betrag angeglichen ist;
- für jede erste Halbeinheit (22), ersten Nockenstößelmitteln (41), die dem Zusatzelement (28) zugeordnet sind, wobei bei jeder Drehung des Karussells die ersten Nockenstößelmittel (41) mit ersten Nockenmitteln (31) gekoppelt sind, um zumindest einen ersten Schließschritt der Formungseinheit (21) zu betätigen, wobei eine Annäherung der ersten Halbeinheit (22) an die zweite Halbeinheit (23) durch eine Zusatzbewegung des Zusatzelements (28), das durch die ersten Nockenmittel (31) geführt ist, bewirkt wird;
- für jede erste Halbeinheit (22), zweiten Nockenstößelmitteln (42), die der ersten Halbeinheit (22) zugeordnet sind, wobei bei jeder Drehung des Karussells die zweiten Nockenstößelmittel (42) mit zweiten Nockenmitteln (32) gekoppelt sind, um zumindest einen zweiten Schließschritt der Formungseinheit (21) zu betätigen, bei Vorhandensein der Kompressionskraft, die zumindest teilweise auf die zweiten Nockenmittel (32) während des zweiten Schließschrittes abgeführt wird.

2. Vorrichtung nach Anspruch 1, wobei die Übertragungsmittel einen bewegungsvervielfachenden Mechanismus (50) aufweisen, der mit dem Zusatzelement (28) und der ersten Halbeinheit (22) verbunden ist.

3. Vorrichtung nach Anspruch 1 oder 2, mit den ersten Nockenmitteln und den zweiten Nockenmitteln, die jeweils zumindest ein erstes Nockenprofil (31) und zumindest ein zweites Nockenprofil (32) aufweisen, die jeweils entlang eines ersten Umfangssektors und eines zweiten Umfangssektors um die Drehachse angeordnet sind.

4. Vorrichtung nach Anspruch 3, wobei die ersten Nockenstößelmittel zumindest einen ersten Nockenstößel (41) aufweisen, der an dem Zusatzelement (28) angebracht und mit dem ersten Nockenprofil (31) gekoppelt ist, um den ersten Schließschritt in Abwesenheit der Kompressionskraft zu betätigen.

5. Vorrichtung nach Anspruch 3 oder 4, wobei die zweiten Nockenstößelmittel zumindest einen zweiten Nockenstößel (42) aufweisen, der an der ersten Halbeinheit (22) angebracht und mit dem zweiten Nockenprofil (32) gekoppelt ist, um den zweiten Schließschritt der Formungseinheit (21) bei Vorhandensein der Kompressionskraft zu betätigen, wobei bei jedem Schließzyklus der zweite Schließschritt dem ersten Schließschritt folgt; insbesondere wobei, während des zweiten Schließschrittes, der zweite Nockenstößel (42) mit dem zweiten Nockenprofil (32) gekoppelt ist, um zumindest einen zweiten Annäherungspart der ersten Halbeinheit (22) zu der zweiten Halbeinheit (23) zu betätigen; insbesondere wobei die erste Halbeinheit (22), wenn sie den zweiten Annäherungspart ausführt, der zweiten Halbeinheit (23) näher ist als wenn sie den ersten Annäherungspart ausführt.

6. Vorrichtung nach irgendeinem vorhergehenden Anspruch, wobei die Übertragungsmittel eine Wippe (50) aufweisen, die mit dem Zusatzelement (28), der ersten Halbeinheit (22) und einem Abschnitt (64) des Rahmens (20) verbunden ist; insbesondere wobei die Wippe (50) einen ersten Abschnitt, der durch einen ersten Stift (51) mit der ersten Halbeinheit (22) gelenkig verbunden ist, einen zweiten Abschnitt, der durch einen zweiten Stift (52) mit dem Abschnitt (64) des Rahmens gelenkig verbunden ist, und einen dritten Abschnitt aufweist, der zwischen dem ersten Abschnitt und dem zweiten Abschnitt angeordnet und durch einen dritten Stift (53) mit dem Zusatzelement (28) gelenkig verbunden ist; insbesondere wobei zumindest zwei der drei Stifte in zwei jeweiligen Schlitzen beweglich sind.

7. Vorrichtung nach irgendeinem vorhergehenden Anspruch, mit zumindest dritten Nockenstößelmitteln (43), die der ersten Halbeinheit (22) zugeordnet und mit dritten Nockenmitteln (33) gekoppelt sind, um zumindest einen ersten Öffnungsschritt der Formungseinheit (21) zu betätigen, der zumindest einen ersten Beabstandungspart der ersten Halbeinheit (22) von der zweiten Halbeinheit (23) aufweist; insbesondere wobei die ersten Nockenstößelmittel (41) mit den ersten Nockenmitteln (31) gekoppelt sind, um zumindest einen zweiten Öffnungsschritt der Formungseinheit (21) zu betätigen, der bei jedem Öffnen dem ersten Öffnungsschritt folgt, wobei der zweite Öffnungsschritt zumindest einen zweiten Beabstandungspart der ersten Halbeinheit (22) von der zweiten Halbeinheit (23) aufweist, wobei während des zweiten Beabstandungsparts die erste Halbeinheit (22) weiter von der zweiten Halbeinheit (23) entfernt ist als wenn sie den ersten Beabstandungspart ausführt.

8. Vorrichtung nach irgendeinem vorhergehenden Anspruch, wobei bei jeder Drehung des Rahmens (20) des Karussells zumindest ein der ersten Halbeinheit (22) zugeordneter Nockenstößel mit vierten Nockenmitteln (34) gekoppelt ist, die sich zumindest teilweise umfänglich zwischen den ersten Nockenmitteln (31) und den zweiten Nockenmitteln (32) erstrecken, um die erste Halbeinheit (22) in einem Übergangsschritt zwischen dem ersten Schließschritt und dem zweiten Schließschritt zu führen.

9. Vorrichtung nach irgendeinem vorhergehenden Anspruch, mit ersten Dämpfungsmitteln (29), die insbesondere für die erste Halbeinheit (22) bereitgestellt sind, und die zum Dämpfen einer scharfen Bewegung der ersten Halbeinheit aufgrund eines möglichen Sprungs der ersten Nockenstößelmittel (41) an einem ersten Totpunkt der ersten Nockenmittel (31) angeordnet sind; insbesondere wobei die ersten Dämpfungsmittel (29) so angeordnet sind, dass sie dazu neigen, die erste Halbeinheit (22) zu schließen.

10. Vorrichtung nach irgendeinem vorhergehenden Anspruch, mit zweiten Dämpfungsmitteln (30), die insbesondere für das Zusatzelement (28) bereitgestellt sind, und die zum Dämpfen einer scharfen Bewegung des Zusatzelements (28) aufgrund eines möglichen Sprungs der ersten Nockenstößelmittel (41) an einem zweiten Totpunkt der ersten Nockenmittel (32) angeordnet sind; insbesondere wobei die zweiten Dämpfungsmittel (30) so angeordnet sind, dass sie dazu neigen, die erste Halbeinheit (22) zu öffnen.

11. Vorrichtung nach irgendeinem vorhergehenden Anspruch, wobei bei jeder Drehung des Rahmens (20) des Karussells zumindest ein der ersten Halbeinheit (22) zugeordneter Nockenstößel mit fünften Nockenmitteln (35) gekoppelt ist, um die erste Halbeinheit (22) zumindest in einem Schritt eines Eintretens des Objekts (C) in die erste Halbeinheit zu führen, so dass die erste Halbeinheit (22) ihre eigene Objektaufnahmeebene aufweist, die sich in einer gewünschten Bezugsposition bzgl. einer Eintrittsebene des Objektes in die erste Halbeinheit befindet, um eine Bewegung der ersten Halbeinheit (22) aus einer Bezugsposition zu begrenzen; insbesondere wobei die Bewegung der ersten Halbeinheit (22) aus einer Bezugsposition durch eine Lückenausgleichseinrichtung verursacht ist, um so eine Lückenausgleichung zu vermeiden, die ein korrektes Eintreten des Objekts in die Aufnahmeebene verhindert.

12. Vorrichtung nach irgendeinem vorhergehenden Anspruch, wobei das Zusatzelement (28) einen Läufer aufweist, der mit dem Rahmen (20) gleitend in einer Gleitrichtung parallel zur Drehachse und zu einer Gleitachse der ersten Halbeinheit (22) gekoppelt ist.

13. Vorrichtung nach irgendeinem vorhergehenden Anspruch, mit einer Einstelleinrichtung zum Einstellen eines Abstands zwischen den ersten Nockenstößelmitteln (41) und den zweiten Nockenstößelmitteln (42) in einer Weise, um die Unterschiede zwischen den Formungseinheiten (21) in Folge der verschiedenen Toleranzen der mechanischen Komponenten auszugleichen.

14. Vorrichtung nach Anspruch 13, wobei die Einstelleinrichtung zumindest ein exzentrisches Element (63) aufweist, das mit den bewegungsvervielfachenden Übertragungsmitteln (50) gekoppelt ist.

15. Vorrichtung nach Anspruch 13 oder 14, wobei die Einstelleinrichtung zwischen den Übertragungsmitteln (50) und einem Abschnitt (64) des Rahmens (20) angeordnet ist.

## Revendications

1. Appareil de formage (13) comprenant :
- un carrousel de formage possédant un bâti (20) en rotation autour d'un axe de rotation et qui porte une pluralité d'unités de formage (21) qui sont espacées angulairement les unes des autres autour dudit axe de rotation ;
- pour chaque unité de formage (21), une première moitié d'unité (22) et une seconde moitié d'unité (23) qui sont aptes à prendre au moins une position de fermeture, dans laquelle est générée entre lesdites moitiés d'unité (22; 23) une force de compression qui est apte à former un objet, et au moins une position ouverte, dans laquelle il est possible d'introduire un objet à former et d'expulser un objet formé, lesdites moitiés d'unités (22; 23) étant aptes à effectuer au moins un mouvement de rapprochement réciproque pour fermer l'unité de formage (21) et un mouvement d'éloignement réciproque pour ouvrir l'unité de formage (21), ladite première moitié d'unité (22) au moins étant mobile par rapport audit bâti (20);
- pour chaque première moitié d'unité (22), au moins un élément auxiliaire mobile (28) relié à ladite première moitié d'unité (22) par des moyens de transmission de multiplication de mouvement (50) agencés de telle manière qu'un mouvement auxiliaire dudit élément auxiliaire (28) d'une certaine ampleur est apparié à un mouvement principal de ladite première moitié d'unité (22) d'une ampleur supérieure;
- pour chaque première moitié d'unité (22), des premiers moyens de suiveur de came (41) associés audit élément auxiliaire (28), à chaque rotation du carrousel lesdits premiers moyens de suiveur de came (41) étant couplés à des premiers moyens de came (31) pour commander au moins une première étape de fermeture de l'unité de formage (21) avec une approche de ladite première moitié d'unité (22) vers ladite seconde moitié d'unité (23) provoquée par un mouvement auxiliaire dudit élément auxiliaire (28) guidé par lesdits premiers moyens de came (31);
- pour chaque première moitié d'unité (22), des seconds moyens de suiveur de came (42) associés à ladite première moitié d'unité (22), à chaque rotation du carrousel lesdits seconds moyens de suiveur de came (42) étant couplés à des seconds moyens de came (32) pour commander au moins une seconde étape de fermeture de l'unité de formage (21), en présence de la force de compression qui est déchargée au moins partiellement sur lesdits seconds moyens de came (32) pendant ladite seconde étape de fermeture.

2. Appareil selon la revendication 1, dans lequel lesdits moyens de transmission comprennent un mécanisme de multiplication de mouvement (50) relié audit élément auxiliaire (28) et à ladite première demi-unité (22).

3. Appareil selon la revendication 1 ou 2, comprenant lesdits premiers moyens de came et lesdits seconds moyens de came qui comprennent respectivement au moins un premier profil de came (31) et au moins un second profil de came (32) agencés respectivement selon un premier secteur de circonférence et un second secteur de circonférence autour dudit axe de rotation.

4. Appareil selon la revendication 3, dans lequel lesdits premiers moyens de suiveur de came comprennent au moins un premier suiveur de came (41) monté sur ledit élément auxiliaire (28) et couplé audit premier profil de came (31) pour commander ladite première étape de fermeture en l'absence de la force de compression.

5. Appareil selon la revendication 3 ou 4, dans lequel lesdits seconds moyens de suiveur de came comprennent au moins un second suiveur de came (42) monté sur ladite première moitié d'unité (22) et couplé audit second profil de came (32) pour commander ladite seconde étape de fermeture de l'unité de formage (21) en présence de la force de compression, à chaque cycle de fermeture ladite seconde étape de fermeture étant successive à ladite première étape de fermeture; notamment dans lequel, pendant ladite seconde étape de fermeture, ledit second suiveur de came (42) est couplé audit second profil de came (32) pour commander au moins une seconde partie d'approche de ladite première moitié d'unité (22) vers ladite seconde moitié d'unité (23); notamment dans lequel ladite première moitié d'unité (22), lorsqu'elle effectue ladite seconde partie d'approche, est plus proche de ladite seconde moitié d'unité (23) par rapport à lorsqu'elle effectue ladite première partie d'approche.

6. Appareil selon l'une quelconque des revendications précédentes, dans lequel lesdits moyens de transmission comprennent un culbuteur (50) relié audit élément auxiliaire (28), à ladite première moitié d'unité (22) et à une portion (64) dudit bâti (20); notamment dans lequel ledit culbuteur (50) possède une première portion articulée par un premier axe (51) avec ladite première demi-unité (22), une seconde portion articulée par un second axe (52) avec ladite portion (64) du bâti, et une troisième portion interposée entre ladite première portion et ladite seconde portion et articulée par un troisième axe (53) avec ledit élément auxiliaire (28); notamment dans lequel au moins deux desdits trois axes sont mobiles dans deux fentes respectives.

7. Appareil selon l'une quelconque des revendications précédentes, comprenant au moins des troisièmes moyens de suiveur de came (43) associés à ladite première moitié d'unité (22) et couplés à des troisièmes moyens de came (33) pour commander au moins une première étape d'ouverture de ladite unité de formage (21) comprenant au moins une première partie d'éloignement de ladite première moitié d'unité (22) de ladite seconde moitié d'unité (23); notamment dans lequel lesdits premiers moyens de suiveur de came (41) sont couplés auxdits premiers moyens de came (31) pour commander au moins une seconde étape d'ouverture de ladite unité de formage (21) qui à chaque ouverture, est successive à ladite première étape d'ouverture, ladite seconde étape d'ouverture comprenant au moins une seconde partie d'éloignement de ladite première demi-unité (22) de ladite seconde moitié d'unité (23), pendant ladite seconde partie d'éloignement ladite première moitié d'unité (22) étant plus loin de ladite seconde demi-unité (23) par rapport à lorsqu'elle effectue ladite première partie d'éloignement.

8. Appareil selon l'une quelconque des revendications précédentes, dans lequel, à chaque rotation du bâti (20) du carrousel, au moins un suiveur de came associé à ladite première moitié d'unité (22) est couplé à des quatrièmes moyens de came (34) s'étendant au moins partiellement circonférentiellement entre lesdits premiers moyens de came (31) et lesdits seconds moyens de came (32) pour guider ladite première moitié d'unité (22) dans une étape de transition entre ladite première étape de fermeture et ladite seconde étape de fermeture.

9. Appareil selon l'une quelconque des revendications précédentes, comprenant des premiers moyens d'amortissement (29), appliqués notamment à ladite première moitié d'unité (22), agencés pour amortir un mouvement vif de ladite première moitié d'unité dû à un éventuel saut desdits premiers moyens de suiveur de came (41) à un premier point mort desdits premiers moyens de came (31); notamment dans lequel lesdits premiers moyens d'amortissement (29) sont agencés de manière à tendre à fermer ladite première moitié d'unité (22).

10. Appareil selon l'une quelconque des revendications précédentes, comprenant des seconds moyens d'amortissement (30), appliqués notamment audit élément auxiliaire (28), agencés pour amortir un mouvement vif dudit élément auxiliaire (28) dû à un éventuel saut desdits premiers moyens de suiveur de came (41) à un second point mort desdits premiers moyens de came (32); notamment dans lequel lesdits seconds moyens d'amortissement (30) sont agencés de manière à tendre à ouvrir ladite première moitié d'unité (22).

11. Appareil selon l'une quelconque des revendications précédentes, dans lequel, à chaque rotation du bâti (20) du carrousel, au moins un suiveur de came associé à ladite première moitié d'unité (22) est couplé à des cinquièmes moyens de came (35) pour guider ladite première moitié d'unité (22) dans au moins une étape d'entrée de l'objet (C) dans la première moitié d'unité de telle manière que ladite première moitié d'unité (22) possède son propre plan de réception de l'objet situé dans une position de référence souhaitée par rapport à un plan d'entrée de l'objet dans la première moitié d'unité, pour limiter un mouvement de la première moitié d'unité (22) hors d'une position de référence; notamment dans lequel ledit mouvement de la première moitié d'unité (22) hors d'une position de référence est provoqué par un dispositif de récupération de jeu de manière à empêcher une récupération de jeu d'inhiber l'entrée correcte de l'objet dans le plan de réception.

12. Appareil selon l'une quelconque des revendications précédentes, dans lequel ledit élément auxiliaire (28) comprend un curseur couplé de manière coulissante audit bâti (20) selon une direction de coulissement parallèle audit axe de rotation et à un axe de coulissement de ladite première moitié d'unité (22).

13. Appareil selon l'une quelconque des revendications précédentes, comprenant un dispositif de réglage pour régler une distance entre lesdits premiers moyens de suiveur de came (41) et lesdits seconds moyens de suiveur de came (42) de manière à rattraper les différences entre les unités de formage (21) suite aux différentes tolérances des composants mécaniques.

14. Appareil selon la revendication 13, dans lequel ledit dispositif de réglage comprend au moins un élément excentrique (63) couplé auxdits moyens de transmission de multiplication de mouvement (50).

15. Appareil selon la revendication 13 ou 14, dans lequel ledit dispositif de réglage est interposé entre lesdits moyens de transmission (50) et une portion (64) dudit bâti (20).
